# EUROPEAN PATENT APPLICATION

(11) **EP 1 216 819 A1**
(43) Date of publication of application: **26.06.2002**
(21) Application number: 00311459.2
(22) Date of filing: 20.12.2000
(51) Int. Cl.: B32B 3/26, B29C 59/04, B65D 85/10

(54) **Embossed sheet**

(71) Applicant: Philip Morris Products S.A., 2000 Neuchâtel (CH)
(72) Inventor: Aeschlimann, Reynald, 2035-Corcelles (CH); Lutzig, Bodo Werner, 1373-Charvorney (CH)
(74) Representative: Marlow, Nicholas Simon

(57) **Abstract**

Disclosed is an embossed sheet comprising at least two layers with contrasting appearances. The sheet is embossed whereby on parts of the embossments the first sheet is removed to make the second sheet visible. The embossed sheet material is useful as a wrapping material for cigarettes or other smoking articles.

## Description

The present invention provides a sheet material having a distinctive appearance. The sheet material of the invention is useful as a wrapping material, such as for cigarettes or other smoking articles.

Embossed sheets such as metal foils, metal/paper laminates and metallised paper or plastics films are widely used in packaging; examples of such use in the packaging of cigarettes include the inner wrap (the sheet which is wrapped immediately around (or partly around) the block of cigarettes inside a soft or box pack of cigarettes) and the overwrap (the outer wrapping sheet of a pack of cigarettes), and monowraps (single wrapping sheets which replace all the layers of wrapping conventionally used in cigarette packs). The wrapping sheet serves to protect the cigarettes and also has a decorative function; it may carry product identification and other trade mark material and/or instructions, such as "PULL" in the case of the inner wrap. Inner wraps are typically of foil, foil and paper or plastics film laminates or metallised paper or plastics film; overwraps are typically of clear or metallised plastics film; and monowraps are typically of multi-layer/sandwich construction including a basic substrate layer, lacquers, inks, other laminated layers and metallised layers. Other wrapping sheets used in cigarette packaging include bundle wraps, used to wrap several packs of cigarettes together (usually ten packs each of twenty cigarettes); these are typically of printed paper or printed or metallised plastics film.

Wrapping sheets are often embossed for decorative purposes, for product identification purposes, for the purpose of imparting instructions to the user and also to improve the ease with which the sheets can be folded.

The sheets can be embossed by a pair of opposed rotating profiled embossing rollers; the sheet is passed through the nip between the rollers and conforms to their profiles. There are several different types of rollers; a particularly effective example is the type in which two hardened steel rollers having corresponding male and female profiles mesh together; one roller is driven by a motor and the other roller is driven by the driven roller. Such embossing apparatus is disclosed in US 5 007 271, US 5 558 774 and EP 0 925 911. Typically, the embossing rollers have a profile comprising thousands of small square based pyramids (typically having bases with 0.4 mm sides). Graphic material is imposed on the embossed pattern by flat areas on one of the rollers corresponding to the image required; the sheet is not embossed by these flats. An example of such an embossing apparatus is that sold by Boegli-Gravures S.A. of Neuchatel, Switzerland, under the serial number 19 000 000.

It has been desired to enhance the aesthetic effect and, particularly, the effectiveness of these wrapping sheets as carriers of product identity and other trade mark material by provision of a distinctive means of applying graphic material to an embossed sheet without the need for a further processing step additional to that of embossing the sheet.

According to the invention, there is provided an embossed sheet comprising at least a first layer and a second layer of contrasting appearance to the first layer, the sheet having a plurality of embossed bosses, the first layer being absent from a face of at least some of the bosses so that the second layer is visible.

The second layer which is visible where the first layer is absent may not be immediately adjacent the first layer; there may be one or more intervening transparent layers. The first may be but need not be the top (or bottom) layer of the sheet.

The effect of the removal of the first layer from at least some of the faces of the embossed bosses of the sheet is to provide regions of the sheet of contrasting colour to the remainder of the sheet. These regions will be most apparent when the sheet is viewed towards the faces of the bosses from which the first layer has been removed.

Preferably, the first layer has a metallic appearance and the second layer is of a contrasting metallic or non-metallic appearance. Also preferably, the first and second layers cover a substrate, such as paper; there may be further layers interposed between the substrate and the second layer or over the first layer to achieve the desired performance from the sheet.

The sheet may be of any material comprising at least two layers of contrasting appearance. Preferred sheets include: paper printed with ink or lacquer layers, such as a paper/lacquer/print sheet; paper/metal (particularly aluminium) laminates; metallised paper, such as a paper/coating/pre lacquer/metal/surface lacquer sheet; paper/plastics film laminates, which may be printed or metallised; and metallised plastics (such as polypropylene) film, such as a metallised film/primer/print (any colour print including metallic) or coloured transparent film. The sheet may include a combination of the layers mentioned above, for example, a metallised plastics film may be overlain with a printed ink layer, and may of course include additional layers such as clear lacquers and adhesive layers. The basis weight of the sheet will depend upon the use to which it is to put; an overwrap sheet will have a significantly smaller basis weight then a sheet from which a box of a hard cigarette pack is to be formed, for example.

Also according to the invention, there is provided a method of providing an embossed sheet according to the invention, comprising passing a sheet comprising a first layer and a second layer of contrasting appearance to the first layer between a pair of embossing rollers to form bosses on the sheet, the leading or trailing faces of the bosses being subjected to shear as the sheet passes between the rollers such that the first layer is removed from the sheet over at least some of the said faces.

Also according to the invention there is provided a pack such as a pack for cigarettes or other smoking articles in which the smoking articles are wrapped in an inner wrap formed of a sheet according to the invention, a wall of the pack having an aperture through which the inner wrap is visible when the pack is closed.

The invention is further described, by way of example, with reference to the drawings, in which;
Figure 1 shows a sheet to be embossed to provide an embossed sheet according to the invention;
Figure 2 shows the sheet of Figure 1 during embossing;
Figure 3 shows the sheet of Figure 1 after embossing; and
Figure 4 shows a cigarette pack according to the third aspect of the invention.

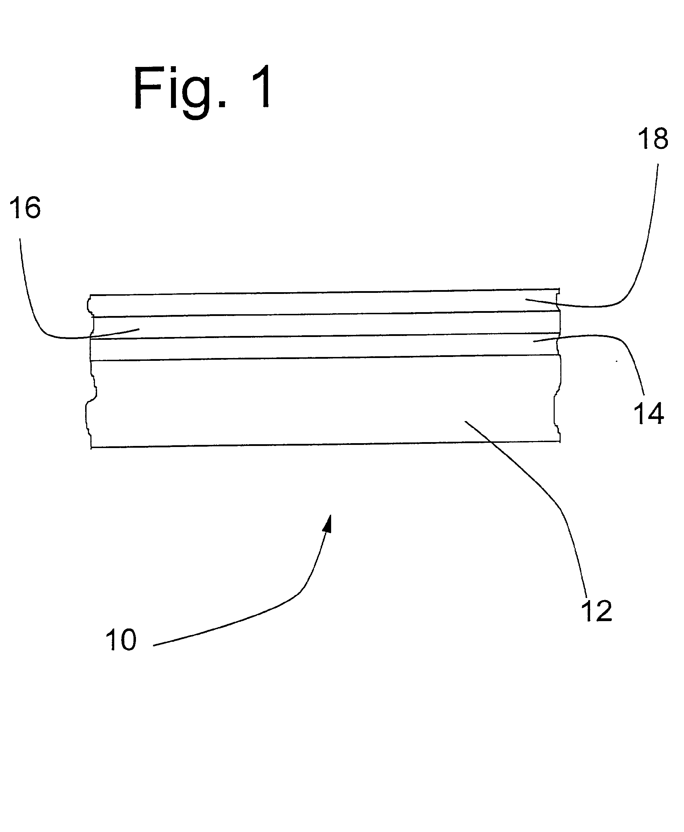

The sheet 10 of Figure 1 is particularly useful as an inner wrap for a pack of cigarettes and comprises a paper substrate 12 of basis weight 50g/m² (preferably between 20g/m² and 70g/m²) and thickness 50µm (preferably between 20µm and 65µm). Overlying the paper substrate 12 is a coloured lacquer layer 14 of thickness 1.5µm (preferably between 0.1µm and 3µm) which itself is overlain by a metal layer 16 of aluminium of thickness between 10 and 500Å. The metal layer is itself overlain by a transparent lacquer layer 18 of thickness 1.5µm (preferably between 0.1µm and 3µm). Removal of the transparent 18 and metal 16 layers from the coloured layer 14 and the paper substrate is facilitated if the resistance to shear of the metal layer/coloured lacquer layer bond is less than that of the coloured lacquer layer/paper substrate bond.

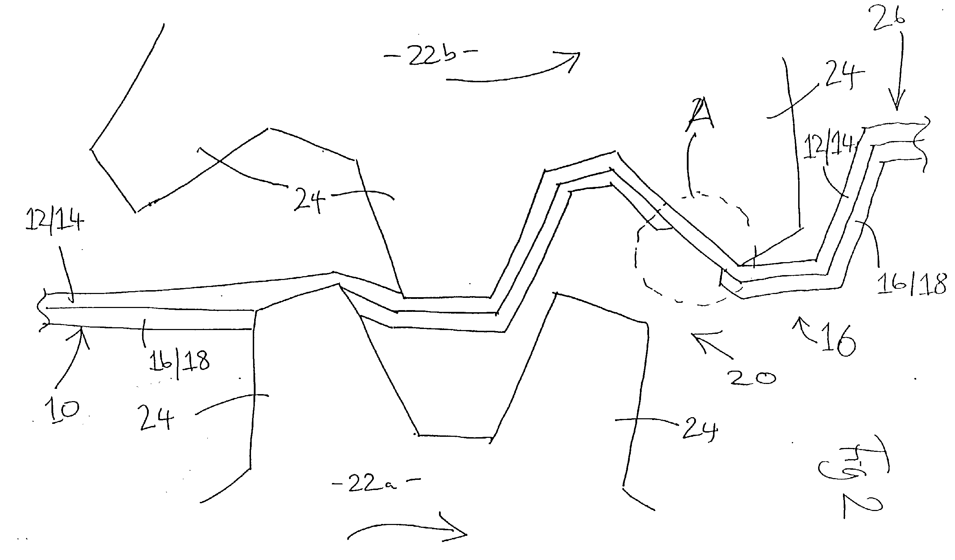

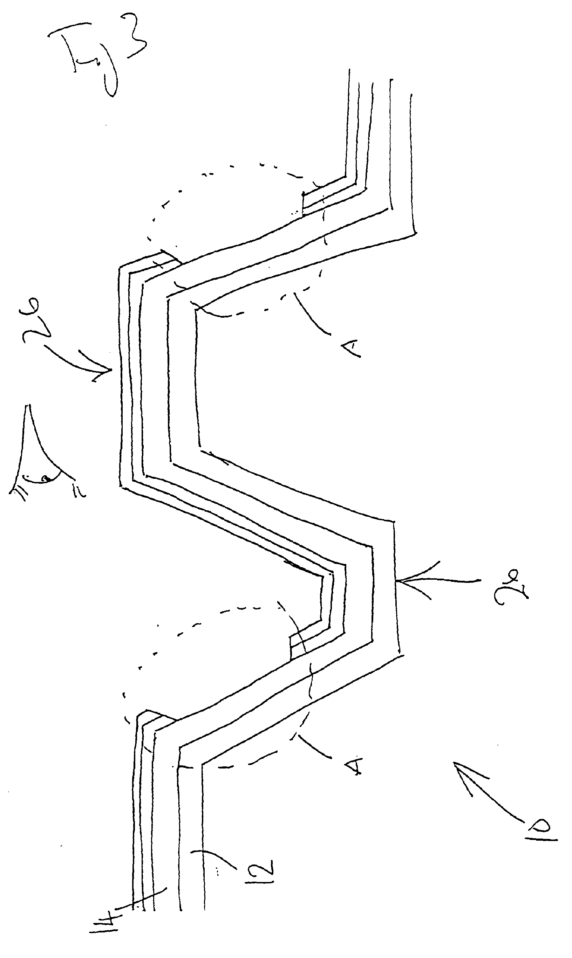

As seen in Figure 2, the sheet 10 is fed into the nip 20 between two rotating embossing rollers 22a, 22b. The surfaces of these rollers typically carry a plurality of truncated pyramid embossing profiles 24 to impart pyramid shaped bosses 26 to the sheet 10 after embossing. The embossing rollers 22a, 22b rotate in the directions shown in Figure 2, to draw the sheet 10 into the nip 20; as the profiles 24 on the roller 22b adjacent the transparent 18 and metal 16 layers of the sheet 10 (the upper roller 22b in Figure 2) impinge on the sheet 10, the leading edges of the profiles 24 shear the transparent 18 and metal 16 layers from the sheet over part of at least some of the bosses 26, as at region A of Figures 2 and 3. Because the resistance to shear of the bond between the coloured lacquer layer 14 and the metal layer 16 of the sheet 10 is less than that between any of the bonds between other layers, the metal 16 and the transparent 18 layers are removed from the substrate where the sheet is subjected to shear by the interaction of the profiles 24 of the embossing rollers 22a, b.

Figure 3 shows the embossed sheet 10. The paper substrate 12, coloured lacquer layer 14, metal layer 16 and transparent lacquer layer 18 remain intact over most of the sheet, giving an overall metallic appearance. In the regions A where the transparent and metal layers have been sheared off by the profiles 24 on one of the embossing rollers 22b the colour lacquer layer 14 is revealed, imparting a different appearance to those regions. It will be appreciated that the exposed coloured lacquer regions A are seen most clearly when the sheet 10 is viewed as generally indicated in Figure 3; the effect will be less noticeable as the viewpoint moves around in relation to the bosses 26 of the embossed sheet 10.

The embossed sheets of the invention have a novel and attractive appearance. It will be apparent that they have many applications in packaging, but they are particularly useful in the packaging of cigarettes and can be used as inner wraps overwraps, monowraps and bundle wraps. If of board, they can be used for the pack body of a box type cigarette pack.

When the embossed sheets of the invention are used as packaging, they can be embossed with trade mark or other material identifying the product, as well as other information or instructions.

In a preferred cigarette pack including an inner wrap of a sheet according to the invention, part of one wall of the paper or board shell of the pack is absent, providing a window through which the inner wrap can be seen; the window can be closed with a transparent film.

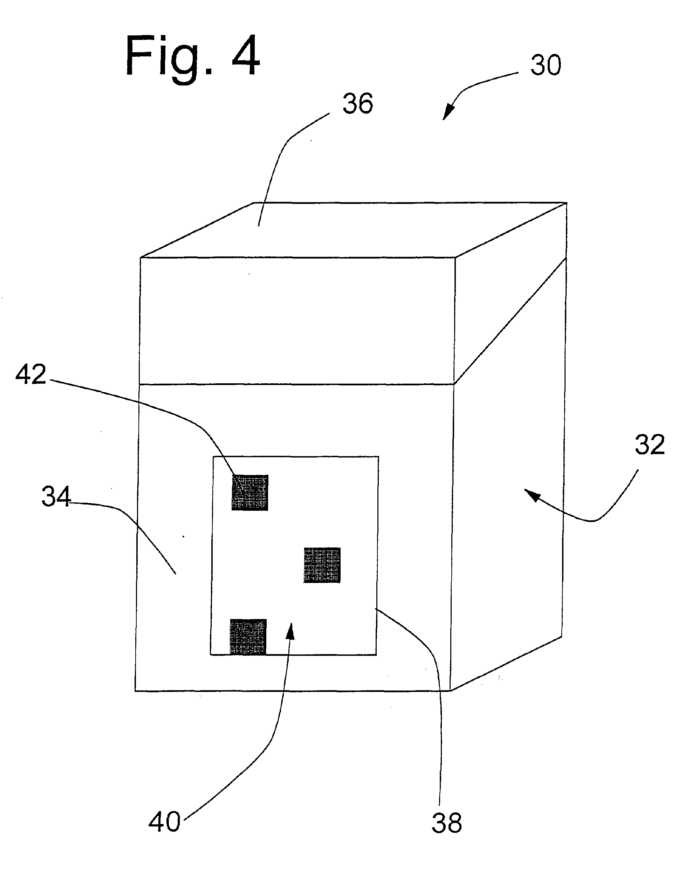

Figure 4 shows a pack 30 of this type comprising an outer shell 32 having a body 34 hinged to a lid 36 which opens to give access to the cigarettes in the pack. The front wall of the pack body 34 has a window 38 in it, where the card of the pack is absent. The cigarettes in the pack are wrapped in a inner wrap 40 of a sheet 10 according to the invention which is visible through the window 38. The inner wrap 40 has a pattern imposed on it comprising regions 42 from which a layer of the sheet has been removed to reveal a contrasting layer.

## Claims

1. An embossed sheet comprising at least a first layer and a second layer of contrasting appearance to the first layer, the sheet having a plurality of embossed bosses, the first layer being absent from a face of at least some of the bosses so that the second layer is visible.

2. A sheet according to claim 1 in which the first layer has a metallic appearance and the second layer is of a contrasting metallic or non-metallic appearance.

3. A sheet according to claim 1 or 2 in which the first and second layers cover a substrate, such as paper.

4. A sheet according to claim 1, 2 or 3 in which there are further layers interposed between the substrate and the second layer or over the first layer.

5. A method of making an embossed sheet comprising passing a sheet comprising a first layer and a second layer of contrasting appearance to the first layer between a pair of embossing rollers to form bosses on the sheet, the leading or trailing faces of the bosses being subjected to shear as the sheet passes between the rollers such that the first layer is removed from the sheet over at least some of the said faces.

6. A pack such as a pack for cigarettes or other smoking articles in which the smoking articles are wrapped in an inner wrap formed of a sheet according to any of claims 1 to 4, a wall of the pack having an aperture through which the inner wrap is visible when the pack is closed.
